# EUROPÄISCHE PATENTSCHRIFT

(11) **EP 2 684 744 B1**
(45) Veröffentlichungstag und Bekanntmachung des Hinweises auf die Patenterteilung: **02.05.2018**
(21) Anmeldenummer: 13175728.8
(22) Anmeldetag: 09.07.2013
(51) Int. Cl.: B60R 13/02, B29C 45/14, B29C 45/16, B32B 3/02, B60R 13/04

(54) **ZIERTEIL FÜR KRAFTFAHRZEUGE UND VERFAHREN ZU SEINER HERSTELLUNG**
TRIM PART FOR MOTOR VEHICLES AND METHOD FOR ITS PRODUCTION
PIÈCE DÉCORATIVE POUR VÉHICULES AUTOMOBILES AINSI QUE SON PROCÉDÉ DE FABRICATION

(30) Priorität: 09.07.2012 DE 102012211951
(43) Veröffentlichungstag der Anmeldung: 15.01.2014
(73) Patentinhaber: Wiegand GmbH, 99994 Schlotheim (DE)
(72) Erfinder: Wiegand, Andreas, 99998 Körner (DE); Augener, Heiko, 99994 Marolterode (DE)
(74) Vertreter: Finger, Catrin

(56) Entgegenhaltungen:
- EP-A1- 2 272 718
- EP-A2- 1 287 961
- WO-A1-99/61216
- DE-A1- 10 143 883
- DE-A1- 19 819 557
- DE-A1-102004 062 510
- DE-A1-102005 028 355
- DE-A1-102010 020 039
- DE-A1-102010 039 270
- DE-U1-202010 000 307
- FR-A1- 2 729 886
- US-A1- 2006 222 841

## Beschreibung

Die Erfindung betrifft ein Zierteil für Kraftfahrzeuge mit einem Trägerteil aus einem im Spritzgussverfahren hergestellten thermoplastischen Kunststoffteil aus schlagzähem Material und einer Deckschicht sowie ein Verfahren zu seiner Herstellung. Die Erfindung ist vorzugsweise für die Herstellung von kratzfesten Fahrzeuganbauteilen wie Fensterführungsblenden, Spoilern, Verblendungen von A-, B-, C- oder D-Säulen sowie Dreiecksblenden und Fensterschachtleisten geeignet. Geeignete Anwendungsfälle sind zudem Wasserfangleisten, Abdeckungen und Blenden im Dachbereich, wie beispielsweise Abdeckungen bei Panoramadächern sowie Blenden und Abdeckungen im Bereich eines Kühlergrills und an Heckklappen von Fahrzeugen.

Die WO 00/24421 A beschreibt ein Kraftfahrzeugzierteil, welches drei Schichten umfasst, nämlich eine durchsichtige Schicht, eine Schicht mit reflektierenden Partikeln und eine Schicht mit Farbpigment-Partikeln.

Aus EP 1 695 808 B1 ist ein Zierteil für ein Kraftfahrzeug bekannt, das aus einem Trägerteil aus thermoplastischem Kunststoff hoher mechanischer Festigkeit und einem Deckteil aus einem thermoplastischen Kunststoff, der eine Hochglanzsichtfläche aufweist, besteht. Das Zierteil wird in einem Mehrkomponenten-Spritzgussverfahren hergestellt.

Aus der DE 101 43 883 A1 ist ein Verfahren zur Herstellung eines mehr schichtigen Fahrzeuginncnteils bekannt, bei welchem ein mit einer Vliesschicht versehenes formsteifes Trägerteil als Vliesformteil vorgefertigt wird und in einem weiteren Verfahrensschritt eine Dekorhaut aus Kunststoff auf die Vliesschicht aufgebracht wird. Um die Herstellung weiter zu vereinfachen, wird die Dekorhaut in einem Formwerkzeug direkt an der freien Oberfläche der Vliesschicht des Vliesformteils angeformt und dabei klebstofffrei verankert.

Aus der DE 10 2005 018 355 A1 ist ein Innenverkleidungsteil für Kraftfahrzeuge bekannt, das ein formstabiles Trägerteil aus einem thermoplastischen Kunststoff aufweist, das auf seiner Sichtseite eine weichelastische Schicht aus Polyurethan besitzt, die chemisch oder physikalisch geschäumt sein kann. Es ist vorgesehen, dass die weichelastische Schicht aus Polyurethan aus aliphatischem Polyurethan besteht oder dass die weichelastische Schicht aus Polyurethan mit einem UV undurchlässigen beziehungsweise weitgehend undurchlässigen Lichtschutzlack lackiert ist.

Aus der FR 2 729 886 A1 ist ein Werkstück bekannt, dessen Oberfläche mit einer Beschichtungsschicht versehen ist. Die Beschichtungsschicht wird in einem In-Mould-Coating-Verfahren auf das Werkstück aufgebracht, wobei ein Endabschnitt des Werkstücks eine Beschichtungsschicht mit einer sehr niedrigen Dicke oder Null-Dicke hat.

Der Erfindung liegt die Aufgabe zugrunde, ein verbessertes Zierteil der eingangs genannten Art und ein Verfahren zu seiner Herstellung anzugeben.

Die Aufgabe wird erfindungsgemäß mit einem Zierteil, welches die im Anspruch 1 angegebenen Merkmale aufweist, und mit einem Verfahren, welches die im Anspruch 10 angegebenen Merkmale aufweist, gelöst.

Vorteilhafte Ausgestaltungen sind in den Unteransprüchen angegeben.

Das Zierteil ist mit einer Deckschicht aus Polyurea oder Polyurethan versehen, die eine Dicke von 100 µm bis 600 µm, insbesondere von 100 µm bis 400 µm, bevorzugt von 200 µm bis 400 µm oder 300 µm bis 400 µm, aufweist. Das Trägerteil wird mit der Deckschicht auf einer Spritzgießmaschine in aufeinanderfolgenden oder parallel laufenden Prozessen hergestellt. Dabei ist ein von Trägerteil und Deckschicht gebildeter Rand zumindest abschnittsweise in Randabschnitten schräg ausgebildet, wobei das Trägerteil und die Deckschicht in diesen Abschnitten am Rand eine Fläche, insbesondere eine ebene oder gekrümmte Fläche bilden, wobei der Übergang stetig verläuft und höchstens eine Trennkante beinhaltet. Alternativ ist zwischen Trägerteil und Deckschicht eine Stufe ausgebildet. Dabei steht die Deckschicht als Stufe über das Trägerteil über oder umgekehrt.

Bei dem von dem Trägerteil und der Deckschicht gebildeten Rand handelt es sich insbesondere um zumindest einen Seitenrand, der nach außen am Zierteil sichtbar sein kann. Der Rand ist zumindest abschnittsweise schräg, d. h. in einem Winkel zur Längsachse des Zierteils ausgebildet, und bildet eine abgeschrägte Fläche über die gesamte Ausdehnung des Seitenrandes.

Das Zierteil zeichnet sich durch hohe Kratzfestigkeit bei hoher Beständigkeit gegenüber Umwelteinflüssen durch Witterungsbeanspruchungen und UV-Strahlen aus. Besonders vorteilhaft ist ferner, dass die Herstellung des Zierteils in einem Maschinentakt erfolgen kann. Weiterhin ist vorteilhaft, dass die Deckschicht nur eine geringe Dicke aufweist, so dass das Zierteil nahezu vollständig aus dem schlagzähen Material des Trägerteils besteht. Damit wird neben der höheren Festigkeit auch eine gegenüber den bekannten Ausführungen mit dickeren Deckteilen verbesserte Designfreiheit ermöglicht. Durch die Ausbildung des Randes zumindest abschnittsweise schräg, wobei Trägerteil und Deckschicht eine Fläche bilden, sind Materialanhäufungen, wie beim umlaufenden Rand, reduziert oder gar vermieden. Die Ausbildung des Randes zumindest abschnittsweise schräg hat den Vorteil, dass der Hohlraum, der mit Lack geflutet werden soll, gegen das Trägerteil abgedichtet ist.

In einer weiteren Ausführungsform ist die Deckschicht rand-, insbesondere kantenseitig, zumindest abschnittsweise abgerundet oder angefast. Hierdurch ist die Deckschicht gegenüber herkömmlichen umlaufenden Deckschichten vor Beschädigungen geschützt.

Das Zierteil wird im Spritzgießverfahren mit einem Trägerteil aus einem schlagzähen Material hergestellt, vorzugsweise aus ABS, ASA, ABS-PC, PC, PC-PBT, ASA-PC oder anderen schlagzäh-modifizierten Varianten. Beispielsweise wird das Zierteil in einem physikalischen Spritzgießverfahren zum Schäumen von Thermoplasten hergestellt.

Vorteilhaft wird die Deckschicht aus zwei Komponenten erzeugt, welche in einer Mischdüse kurz vor dem Eintritt ins Werkzeug zusammengebracht werden. Dabei werden einem Grundwerkstoff Nanopartikelsubstrate zugefügt. Die Deckschicht benötigt nur eine sehr kurze Aushärtezeit, beispielsweise zwei Sekunden.

Es ist auch möglich, dass die Deckschicht einen Randbereich des Trägerteils bedeckt.

Eine vorteilhafte Ausführung sieht vor, dass die Deckschicht zumindest abschnittsweise zusätzlich eine Randüberdeckung aufweist, die mindestens eine Seitenfläche des Trägerteils teilweise oder vollständig überdeckt. In einer möglichen Ausführungsform kann die partiale oder vollständige Randüberdeckung das Zierteil vollständig umlaufend ausgebildet sein. Alternativ können nur einzelne Randabschnitte mit einer Randüberdeckung versehen sein. Auch kann die Randüberdeckung teilweise oder vollständig die Seitenfläche des Trägerteils überdecken.

Ferner ist es möglich, dass am Trägerteil an der der Deckschicht abgewandten Seite Dichtungen angebracht sind oder mindestens eine Profilleiste angeordnet ist. Es ist auch möglich dass Dichtungen bzw. Weichlippen an der Seite am Umbug befestigt sind und Kontakt oder sehr nah zur Deckschicht ausgebildet sind. In einer möglichen Ausführungsform ist die Profilleiste als L-, I- oder T-Profil ausgeführt. Es können auch mehrere Profilleisten vorgesehen sein, um beispielsweise zusätzliche Funktionen, wie Befestigung, Dichtungen, Sensoren zu integrieren.

Eine weitere vorteilhafte Ausführung sieht vor, dass zumindest das Trägerteil randseitig zumindest abschnittsweise einen Umbug aufweist. Eine solche Umbiegung dient der Befestigung des Zierteils, beispielsweise am Türrahmen. Im Bereich des Umbugs oder eines Randes weist das Trägerteil auf der der Deckschicht zugewandten Seite eine Ausnehmung in einer vorgegebenen Tiefe zur Aufnahme der Deckschicht auf. Dabei wird die Deckschicht derart in die Ausnehmung des Umbugs eingebracht, dass die Deckschicht das Trägerteil im Bereich der Ausnehmung überdeckt und mit dem Trägerteil im Bereich des Umbugs oder des Randes eine Fläche bildet.

Eine weitere vorteilhafte Ausführung sieht vor, dass das Zierteil Elemente, wie Sensoren, aktive und passive Bauelemente und/oder Bauelemente zur Anordnung von Sensoren, wie Drucksensoren oder Foliensensoren, enthält.

Die Herstellung des Zierteils erfolgt durch Spritzgießen, wobei eine Werkzeug-formhälfte nach dem Spritzen des Trägerteils gedreht wird oder bei Verwendung eines Schiebetischs seitlich verschoben wird. Eine zweite Werkzeugformhälfte dichtet das Trägerteil, welches sich noch in der jetzt gedrehten oder verschobenen Position, insbesondere Auswerferseite befindet, ab. Anschließend wird eine Polyurea- oder Polyurethan-Schicht über das Trägerteil geflutet. Der Formeinsatz der Sichtfläche ist poliert und sowohl an der Angussseite für das noch flüssige Material für die Deckschicht als auch an der gegenüberliegenden Seite geöffnet. Das Material für die Deckschicht überströmt das Bauteil von einer der Seiten und tritt an der gegenüberliegenden Seite wieder aus. Nach dem Aushärten wird das Werkzeug geöffnet und das Bauteil entnommen.Der überstehende Lackrest an der dem Lackanguss gegenüberliegenden Seite wird entfernt, insbesondere abgeschnitten, abgebrochen oder abgelasert. Nach dem Entfernen kann das Teil auf ein Auskühl-Förderband zum Auskühlen und weiteren Bearbeitung gelegt werden.

Eine vorteilhafte Verfahrensvariante sieht vor, dass das Trägerteil zur Vermeidung von Einfallstellen während des Spritzgießens geschäumt wird. Das Schäumen kann mittels Thermoplastischem Schaumspritzgießen, insbesondere unter Einsatz von chemischen und/oder physikalischen Treibmitteln erfolgen.

Die Erfindung wird im Folgenden anhand vom Ausführungsbeispielen näher erläutert.

In den zugehörigen Zeichnungen zeigen:
Figuren 1 und 2 : einen Querschnitt durch ein als Blendenbauteil ausgebildetes Zierteil mit unterschiedlicher Randüberdeckung,
Figuren 3 bis 18 : verschiedene Ausführungsbeispiele eines Zierteils in verschiedenen Ansichten.

Einander entsprechende Teile sind in allen Figuren mit den gleichen Bezugszeichen versehen.

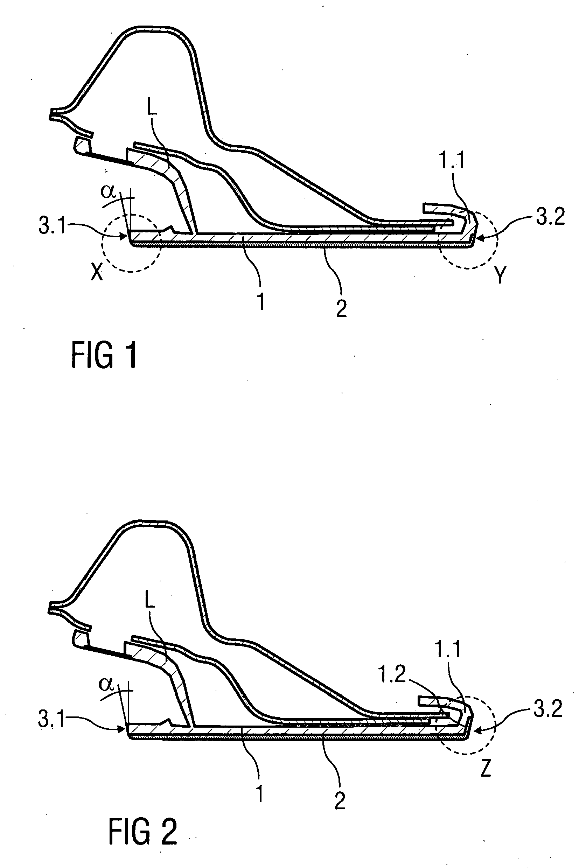

Figur 1 zeigt als ein mögliches Ausführungsbeispiel für ein Zierteil ein Blendenbauteil, das aus einem Trägerteil 1 und einer darauf angebrachten Deckschicht 2 gebildet ist. Für das Trägerteil 1 wird ein schlagzäher Kunststoff verwendet. Auf dem Trägerteil 1 wird dabei eine Lackschicht aus Polyurea oder Polyurethan als Deckschicht 2 aufgebracht.

Die Deckschicht 2 wird mit einer Dicke von 100 µm bis 600 µm, insbesondere von 100 µm bis 400 µm, bevorzugt von 200 µm bis 400 µm oder 300 µm bis 400 µm aufgebracht. Die Dicke kann dabei variieren und wird bestimmt durch die Art und Funktion und insbesondere die Beanspruchung des Zierteiles.

Die verwendeten Materialien können dabei derart ausgewählt sein, dass eine transparente oder teiltransparente oder farbige Deckschicht 2, insbesondere Lackschicht, gebildet wird. Dabei kann die Deckschicht 2 beispielsweise aus einem Klarlack oder einem durchgefärbten Lack gebildet sein.

Zusätzlich kann das Deckschichtmaterial mit Zusätzen und/oder mit einer Beschichtung versehen sein, um vorgegebene Eigenschaften zu erzielen.

So kann die Deckschicht 2 durch entsprechende Materialien und/oder Färbung des Materials einen vorgegebenen Reflexionsgrad aufweisen, so dass Infrarot- und/oder Wärmestrahlen reflektiert werden, wodurch eine Bauteilaufheizung und/oder die Aufheizung des Fahrzeuginnenraumes reduziert werden kann. Alternativ können optische Elemente, wie Lichtleiter, in die Deckschicht 2 und/oder in das Trägerteil 1 integriert sein.

Eine weitere alternative oder zusätzliche Variante sieht vor, dass die Deckschicht 2 eine hydrophobe, insbesondere wasser- und/oder schmutzabweisende sowie selbstreinigende, Oberfläche aufweist.

Der Lack besteht in der Regel aus zwei Komponenten die vor Einbringung in das Spritzgusswerkzeug vermischt werden. Der Lack überströmt das Trägerteil 1. Ein Anteil des Lackes tritt an einem Überlauf wieder aus dem Spritzgusswerkzeug.

Im dargestellten Beispiel schließt die Deckschicht 2 an der mit "X" gekennzeichneten Stelle bündig mit dem Trägerteil 1 ab. An der mit "Y" gekennzeichneten Stelle umschließt die Deckschicht 2 eine Seitenfläche des Trägerteils 1 teilweise. Dabei kann die Randüberdeckung das Zierteil vollständig umlaufend ausgebildet sein. Alternativ können nur einzelne Randabschnitte mit der Randüberdeckung versehen sein.

Im Detail ist zumindest ein von dem Trägerteil 1 und der Deckschicht 2 gebildeter erster Rand 3.1 schräg ausgebildet. Der erste Rand 3.1 ist derart schräg, d. h. in einem Winkel zur Längsachse des Zierteils ausgebildet, dass er eine abgeschrägte Fläche über die gesamte Ausdehnung des Seitenrandes des Zierteils bildet. Hierdurch ist der Hohlraum, der während der Herstellung mit Lack geflutet wird, abgedichtet. Beispielsweise ist der erste Rand 3.1 in einem vorgegebenen Winkel α von 5° bis 50°, insbesondere von 5° bis 10°oder 5° bis 30°angeschrägt ausgebildet. Darüber hinaus bilden das Trägerteil 1 und die Deckschicht 2 in diesem Bereich des Randes 3.1 eine Fläche ohne Randüberdeckung durch die Deckschicht 2.

Eine weitere Ausführung sieht vor, dass die Deckschicht 2 im Randbereich zur Reduzierung oder Vermeidung von Beschädigung infolge mechanischer Beanspruchungen, insbesondere bei der Montage, abgerundet oder angefast ist. Die Abrundung oder Anfasung führt in besonders vorteilhafter Weise gleichzeitig auch zu einer Verbesserung des optischen Erscheinungsbildes.

In einer weiteren Ausführungsform weist die Deckschicht 2 auf ihrer dem Trägerteil 1 zugewandten Seite in anderen Randabschnitten des Zierteils, insbesondere im Bereich eines zweiten Randes 3.2, zusätzlich einen überdeckenden Rand und somit eine Randüberdeckung auf, die mindestens eine Seitenfläche des Trägerteils 1 anteilig umschließt oder überdeckt.

Die angeschrägten und insbesondere die zusätzlich abgerundeten oder angefasten Ränder 3.1, 3.2 und somit die die Abdichtungen bewirkenden Ränder 3.1, 3.2 werden wahlweise je nach Geometrie der Bauteile in unterschiedlichen Bereichen angewendet, beispielsweise außerhalb von Lackeintrittszone und Lackaustrittszone.

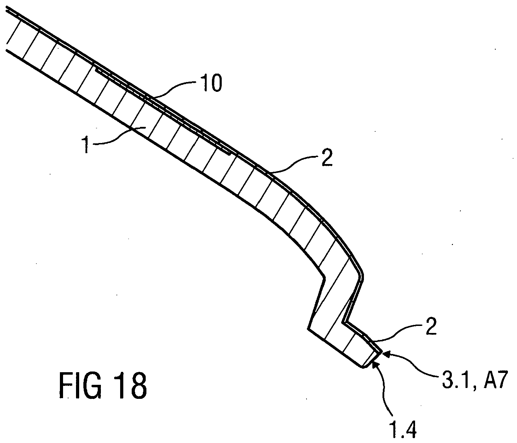

Darüber hinaus ist das Zierteil derart ausgebildet, dass am Trägerteil 1 an der der Deckschicht 2 abgewandten Seite Dichtungen oder Fensterführungsprofile angebracht sind. Hierzu ist am Trägerteil 1 an der der Deckschicht 2 abgewandten Seite eine Profilleiste L angebracht. Die dargestellte Profilleiste L weist ein L-Profil auf, das der Befestigung dient. Darüber hinaus kann die Profilleiste L der Aufnahme beispielsweise einer Fensterführungsdichtung und/oder der Hintergreifung zur Befestigung an anderen Bauteilen oder zur Aufnahme anderer Elemente 10, wie in Figur 18 dargestellt, dienen.

Die Profilleiste L kann zusätzlich in nicht näher dargestellter Art und Weise mit Ausnehmungen, insbesondere Bohrungen, zur Befestigung versehen sein. Auch können weitere, nicht näher dargestellte Profilleisten, insbesondere I-, L-, T-Profilleisten vorgesehen sein.

In Figur 2 ist eine alternative Ausführung für ein Zierteil dargestellt, bei dem das Trägerteil 1 einen seitlichen Schenkel 1.1 aufweist. Der Schenkel 1.1 ist als ein Umbug ausgebildet. Die Deckschicht 2 umschließt dabei den seitlichen Schenkel 1.1 mit einer größeren Randüberdeckung als in Figur 1 dargestellt, wie aus der mit "Z" gekennzeichneten Stelle und dem Vergleich der Stelle Z mit der Stelle Y in Figur 1 ersichtlich ist.

Der Umbug dient der Befestigung des Zierteils, beispielsweise am Türrahmen. Im Bereich des Umbugs weist das Trägerteil 1 auf der der Deckschicht 2 zugewandten Seite eine Ausnehmung 1.2 in einer vorgegebenen Tiefe zur Aufnahme der Deckschicht 2 auf. Dabei wird die Deckschicht 2 derart in die Ausnehmung 1.2 des Umbugs eingebracht, dass die Deckschicht 2 den Rand 3.2 überdeckt und mit dem Trägerteil 1 im Bereich des Umbugs eine Fläche bildet. Die Fläche ist in diesem Ausführungsbeispiel gekrümmt, d.h. mit stetigem Übergang von Deckschicht 2 und Trägerteil 1 ausgeführt.

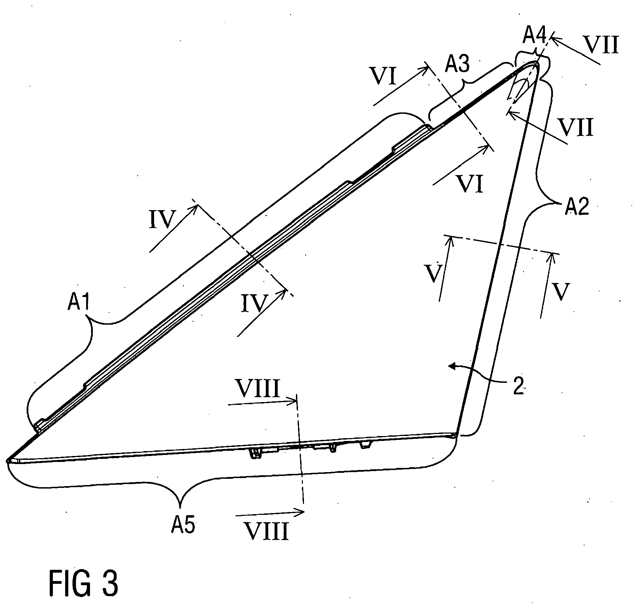

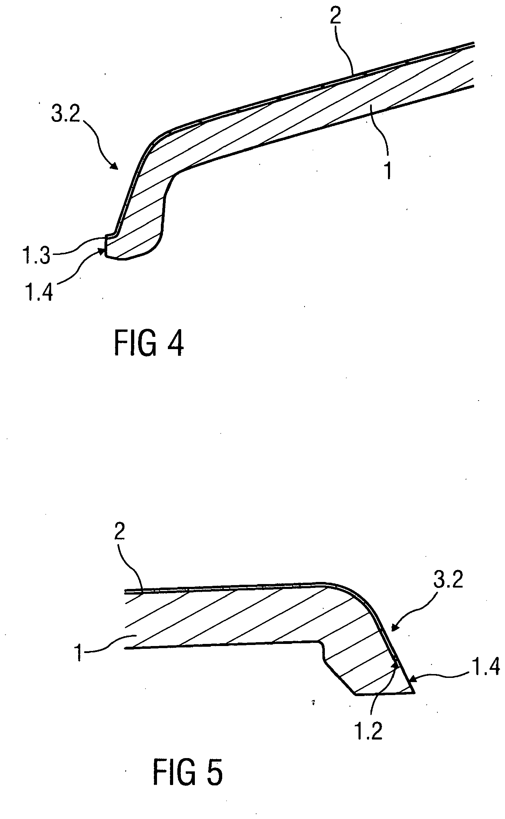

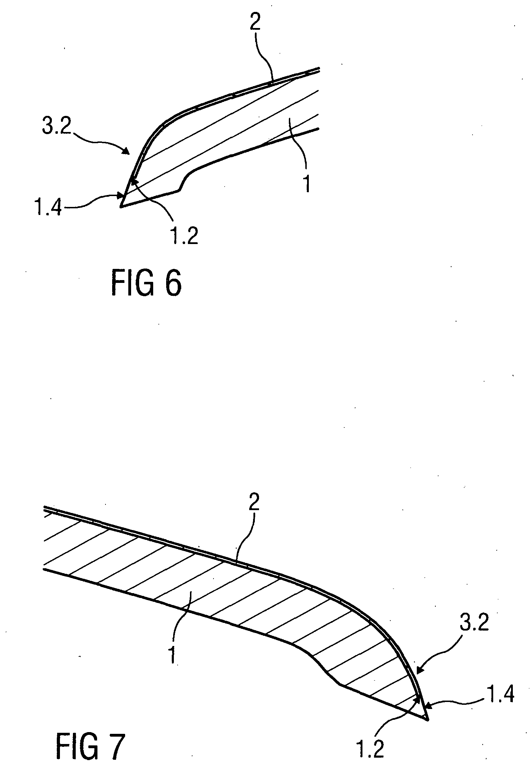

Figur 3 zeigt in Draufsicht ein weiteres Ausführungsbeispiel für ein Zierteil. Das Zierteil ist dabei als eine Dreiecksblende ausgebildet. In Figur 3 sind mehrere Randabschnitte A1 bis A5 und zugehörige Schnittlinien zur Darstellung von Schnittansichten IV bis VIII dieser Randabschnitte A1 bis A5 in den Figuren 4 bis 8 gezeigt. Die Randabschnitte A1 bis A5 können mehrfach in ähnlicher Form und Position am Zierteil vorgesehen sein.

Die Randabschnitte A2 bis A4 dienen zumindest der Abdichtung und weisen, wie in den Figuren 4 bis 7 gezeigt, schräge Ränder 3.2 auf, an welchen die Deckschicht 2 das Trägerteil 1 zumindest teilweise derart überdeckt, dass das Trägerteil 1 und die Deckschicht 2 außenseitig am schrägen Rand 3.2 in einer Fläche liegen. Das Trägerteil 1 ist im Bereich des Randes 3.2 mit einer Ausnehmung 1.2 versehen, so dass beim Überfluten des Trägerteils 1 mit dem Deckschichtmaterial, z. B. Lack, im Herstellungsprozess die von der Deckschicht 2 wegweisende Seite und somit die Innenseite des Trägerteils 1 aufgrund des überstehenden Bereiches abgedichtet ist und nicht mit Deckschichtmaterial versehen wird.

Die Ausnehmung 1.2 am schrägen Rand 3.2 des Trägerteils 1, insbesondere deren Tiefe, korrespondiert mit der Dicke der Deckschicht 2, so dass das Trägerteil 1 und die Deckschicht 2 am schrägen Rand 3.2 außenseitig in einer Fläche liegen. Alternativ ist in nicht näher dargestellter Weise eine Stufenbildung in Form eines kleinen Versatzes möglich. Dabei steht die Deckschicht 2 als Stufe über das Trägerteil 1 über oder umgekehrt.

In Figur 4 ist der schräge Rand 3.2 mit vollständiger Randüberdeckung des Trägerteils 1 durch die Deckschicht 2 endseitig abgewinkelt. Das abgewinkelte Ende des Trägerteiles 1 im Bereich des schrägen Randes 3.2 dient als Angussbereich zum Zuführen des Deckschichtmaterials. Nach Überflutung des Trägerteils 1 durch das Deckschichtmaterial und Aushärten dieses werden überstehende Materialreste entfernt, beispielsweise abgeschnitten oder abgebrochen, so dass das Trägerteil 1 und die Deckschicht 2 im Bereich des Randes 3.2 eine Fläche bilden. Alternativ ist auch eine Abdichtung des Trägerteils 1 in einem Endbereich 1.4 desselben möglich, so dass ein quasi bündiger Abschluss der Deckschicht 2 zum Trägermaterial realisierbar ist.

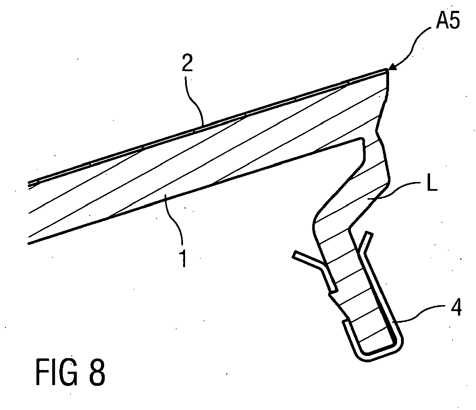

Figur 8 zeigt den Schnitt VIII im Randabschnitt A5, der eine Überflutungs- oder Lackaustrittszone bildet. In diesem Randabschnitt A5 werden überstehende Material-, insbesondere Lackreste nach dem Aushärten der Deckschicht 2 entfernt, z. B. abgeschnitten. Darüber hinaus ist das dargestellte Zierteil in diesem Randabschnitt A5 mit einer Profilleiste L versehen, die zur Aufnahme eines Befestigungsmittels 4, zum Beispiel einer Klammer oder eines Schraubelements, dient. Alternativ sind auch andere Befestigungsmittel 4, beispielsweise Dome mit Sacklöchern zum einfachen Befestigen einer karosserie- oder türseitigen Schraube, verwendbar.

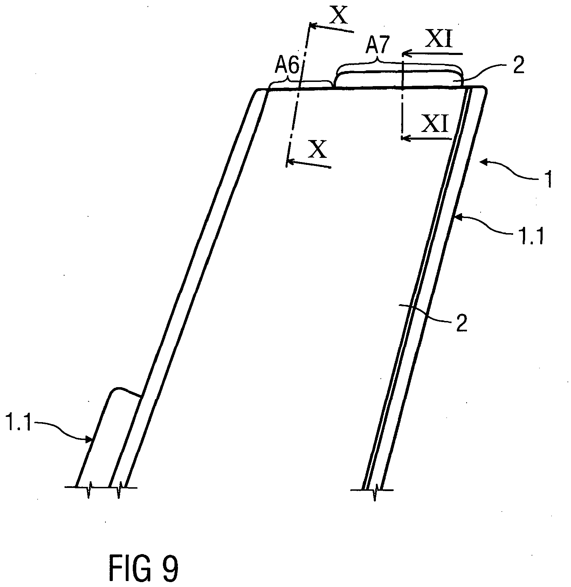

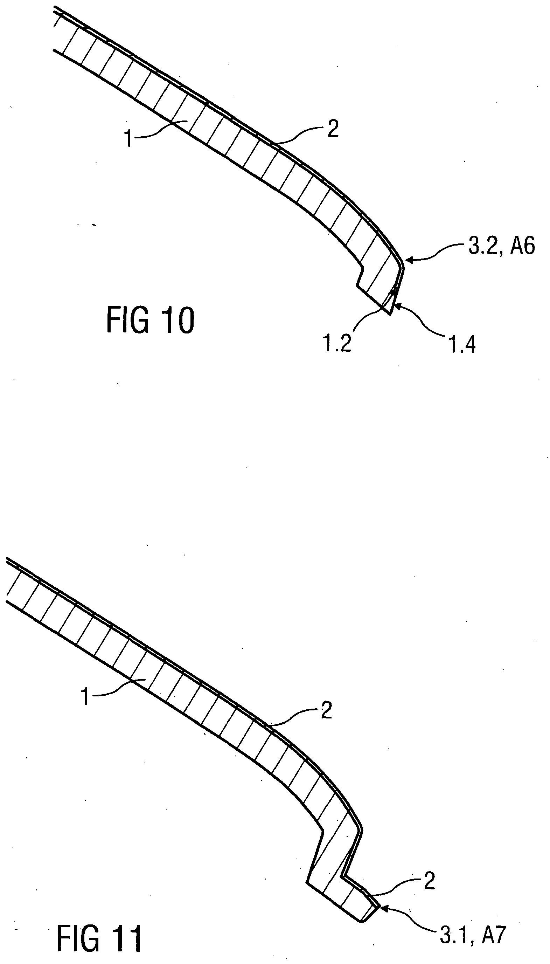

Figuren 9 bis 11 zeigen ein weiteres Ausführungsbeispiel für ein Zierteil. Das Zierteil ist dabei als eine großflächige Blende, beispielsweise um eine im Wesentlichen als Viereckblende oder in nicht dargestellter Weise als Rechteckblende, ausgebildet. In Figur 9 sind mehrere Randabschnitte A6 bis A7 und zugehörige Schnittlinien zur Darstellung von Schnittansichten X bis XI dieser Randabschnitte A6 bis A7 in den Figuren 10 bis 11 gezeigt.

Figur 10 zeigt den einer Abdichtung dienenden Randabschnitt A6 mit einem schrägen Rand 3.2, in welchem die Deckschicht 2 das Trägerteil 1 zumindest teilweise überdeckt. Zur Abdichtung der Innenseite des Trägerteils 2 weist dieses im Randabschnitt A6 eine Ausnehmung 1.2 auf, in welche das Deckschichtmaterial einflutet und das Trägerteil 2 randseitig überdeckt und dort aushärtet, wobei nach Aushärten des Deckschichtmaterials die Deckschicht 2 und das Trägerteil 1 am Rand 3.2 in einer Fläche oder in geringem Versatz zueinander liegen.

Figur 11 zeigt das Zierteil im Randabschnitt A7, der einen Eintritts- oder Austrittsbereich für das Deckschichtmaterial bildet. Nach Aushärten des eingebrachten Deckschichtmaterials werden überstehende Materialreste entfernt, insbesondere abgeschnitten, so dass die Deckschicht 2 und das Trägerteil 1 in diesem Randabschnitt A7 in einer Fläche ohne Randüberdeckung liegen. Alternativ ist auch eine Abdichtung des Trägerteils 1 in einem Endbereich 1.4 desselben möglich, so dass ein quasi bündiger Abschluss der Deckschicht 2 zum Trägermaterial realisierbar ist.

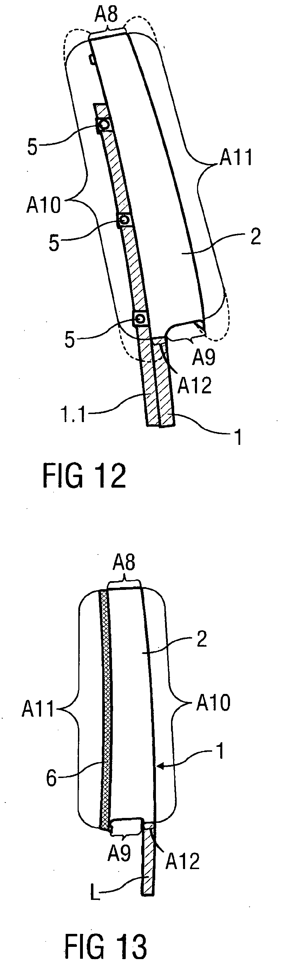

Figuren 12 und 13 zeigen ein weiteres Ausführungsbeispiel eines als vordere Türblende ausgebildeten Zierteiles in Vorderansicht. Sichtseite

Im Bereich von Randabschnitten A8 und A9 werden nach Aushärten der Deckschicht 2 überstehende Materialreste, wie Lackreste, entfernt, z. B. abgeschnitten, so dass in diesen Randabschnitten A8 und A9 keine Randüberdeckung durch die Deckschicht 2 gegeben ist. Diese Randabschnitte A8 und A9 dienen als Einströmbereich bzw. Überströmbereich für das während der Herstellung des Zierteils einströmende Deckschichtmaterial, z. B. als Lackeintritts- und Lackaustrittsbereich.

In seitlichen Randabschnitten A10 bis A12 dieses Zierteils sind schräge Ränder mit einer Schräge von 5° bis 50°, insbesondere von 5° bis 30° in Form der oben beschriebenen Ränder 3.1 oder 3.2 mit in einer Fläche liegenden Deckschicht 2 und Trägerteil 1 ohne bzw. mit Randüberdeckung ausgeformt.

In nicht näher dargestellten Ausführungsbeispielen sind auch abweichende Maße, Formen und Verläufe der Randabschnitte A8 bis A12 möglich, welche insbesondere an unterschiedliche Anwendungsfälle angepasst sind.

Beispielsweise ist der Randabschnitt A12 als Fläche ausgebildet, welche flach oder schräg verlaufend auf dem Trägerteil 1 angeordnet ist und bündig oder mit einem kleinen Versatz zur Deckschicht 2 endet oder sich anschließt.

Darüber hinaus weist das Trägerteil 1 auf der von der Deckschicht 2 abgewandten Seite im Randabschnitt A 10 eine angeformte Profilleiste L auf, welche mit mehreren Durchgangsöffnungen 5 versehen ist, wie in Figur 12 dargestellt. Diese Durchgangsöffnungen 5 können mit Befestigungsmitteln 4, z. B. Schraubelementen oder Rastelementen, versehen sein. Figur 13 zeigt das Zierteil mit einer angespritzten Dichtung 6 im Randabschnitt A11.

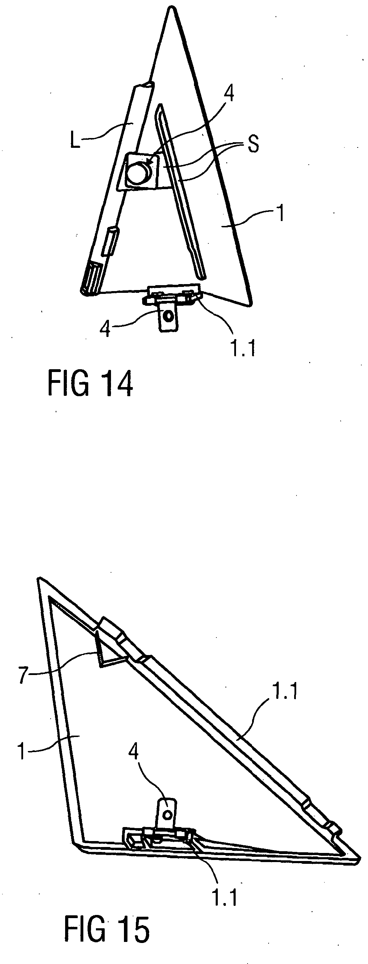

Figur 14 zeigt ein weiteres Ausführungsbeispiel eines als C-Säulen-Blende oder Dreiecksblende ausgebildeten Zierteiles in Rückansicht.

Auf der von der Deckschicht 2 abgewandten Seite weist das Trägerteil 1 eine angeformte Profilleiste L und Stege S sowie einen Schenkel 1.1 zur Befestigung des Zierteils selbst und/oder zur Befestigung von weiteren Bauteilen, wie Dichtungen, Dämpfungselementen oder Befestigungsmitteln 4, am Zierteil auf. Dabei ist es ebenfalls möglich, dass der Schenkel 1.1 als Dom mit Sackloch ausgebildet ist. In diesem Fall ist vorzugsweise kein Befestigungsmittel 4 erforderlich.

Figur 15 zeigt ein weiteres Ausführungsbeispiel eines als A-Säulen-Blende oder Dreiecksblende ausgebildeten Zierteiles in Rückansicht.

Das Trägerteil 1 weist auf der von der Deckschicht 2 abgewandten Seite (= Innenseite des Trägerteils 1) angeformte Schenkel 1.1 zur Aufnahme von Befestigungsmitteln 4 und/oder zum Befestigen selbst, z. B. Einklemmen oder Einhaken, oder zum Hinterhaken von Dichtungen auf. Zusätzlich ist auf der Innenseite des Trägerteils 1 mindestens ein Stützelement 7 zur Abstützung des Zierteils gegenüber anderen Bauteilen angeformt. Dieses Stützelement 7 kann bedarfsweise als Steg, Mehrfachsteg oder als andere Geometrie ausgebildet sein oder entfallen. Das Stützelement 7 ist rippenförmig ausgeführt und weist eine Dreiecksform auf. Dabei kann das Stützelement 7 eine die Höhe der Schenkel 1.1 entsprechende Höhe aufweisen oder höher ausgebildet sein. Alternativ oder zusätzlich kann das auf der Innenseite des Trägerteils 1 ausgebildete Stützelement 7 Versteifungsfunktionen und/oder Abstandsfunktionen übernehmen. Hierzu ist das Stützelement 7 insbesondere rippen- oder gitterförmig und gegebenenfalls flexibel oder elastisch ausgeführt. Zusätzlich ist es möglich, dass in diesem Bereich eine hinterschnittige Hinterhakung zur Befestigung der Blende vorgesehen ist.

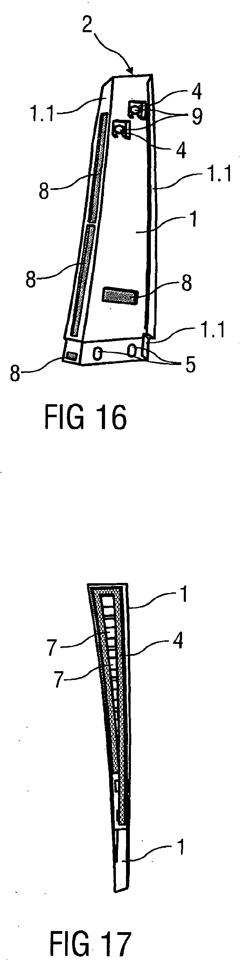

Figur 16 zeigt ein weiteres Ausführungsbeispiel eines als Seitenwangen-Blende ausgebildeten Zierteiles in Rückansicht.

Das Trägerteil 1 weist im Querschnitt eine U-Form auf mit zwei seitlich abgewinkelten Schenkeln 1.1. Auf der von der Deckschicht 2 abgewandten Seite (= Innenseite des Trägerteils 1) der Schenkel 1.1 ist mindestens ein Dämpfungselement 8, z. B. ein Schaumstreifen, zur Geräuschverminderung und/oder mechanischen Stabilisierung aufgeklebt oder ein Dichtschaum angespritzt. Je nach Ausbildung des Dämpfungselements 8, z. B. aus Schaum oder aus doppelseitigem Klebeband, kann dieses auch Abstandsfunktionen und/oder Befestigungsfunktionen übernehmen. Zusätzlich oder alternativ können Befestigungsdome 9 zur Aufnahme von Befestigungsmittel 4, wie Rastelemente, z. B. Clipse, auf der Innenseite des Trägerteils 1 angeformt sein.

Alternativ ist es in nicht dargestellter Weise auch möglich, dass das Trägerteil 1 einen von der U-Form abweichenden Querschnitt ohne die zwei seitlich abgewinkelten Schenkel 1.1 aufweist.

Figur 17 zeigt ein weiteres Ausführungsbeispiel eines als Spoiler-Blende ausgebildeten Zierteiles in Rückansicht.

Das Trägerteil 1 weist eine langgezogene Trapezform - kann auch anderes Design haben- und angeformte rippenförmige Stützelemente 7 auf und ist auf der von der Deckschicht 2 abgewandten Seite (= Innenseite des Trägerteils 1) mit einem einteiligen oder mehrteiligen, in einer möglichen Ausgestaltung umlaufenden Befestigungsmittel 4 versehen. Das Befestigungsmittel 4 ist als doppelseitiges Klebeband ausgebildet und an Innenwänden oder innenseitig an Kontaktflächen des Trägerteils 1 stoffschlüssig befestigt. Alternativ kann es sich um ein Dämpfungselement oder ein Dichtungselement handeln, die angespritzt oder aufgeklebt sind. Auch kann es sich um eine Kombination von Befestigungsmittel und Dämpfungs- und/oder Dichtungselement handeln.

Figur 18 zeigt eine weitere, Ausführungsform für ein Zierteil. Dabei weist das Trägerteil 1 mindestens ein Element 10 auf. Bei dem Element 10 kann es sich insbesondere um einen Sensor, ein Leuchtelement, eine Elektroluminiszens-Folie und/oder ein anderes aktives oder passives Element, wie Leitungen, elektronische Bauteile oder mit Logo bedruckte Folie handeln, die im Trägerteil 1 integriert sind. Auch kann das Element 10 als Sensorfolie ausgebildet sein, unter welcher vorliegend eine Folie mit einer aufgebrachten Anordnung von elektrischen Leitern verstanden wird.

Je nach Art und Funktion des Elements 10 kann dieses, wie dargestellt, auf der der Deckschicht 2 zugewandten Seite des Trägerteils 1 in dieses integriert sein. Das Element kann dabei vollflächig oder in partiellen Bereichen unterhalb der Deckschicht 2 angeordnet sein. Zum Beispiel ist das Element 10 hierzu mit dem Trägerteil 1 stoff-, kraft- und/oder formschlüssig verbunden. Beispielsweise kann das Element 10 vom Trägermaterial umspritzt oder auf dieses geklebt sein, so dass das Element nach Aufbringen der Deckschicht 2 durch Überfluten mit einem nichttransparenten Lack nach außen nicht mehr sichtbar ist.

Alternativ oder zusätzlich kann das Element 10 bzw. ein weiteres Element in nicht näher dargestellter Art und Weise an der Innenseite und somit an der von der Deckschicht 2 wegweisenden Seite des Trägerteils 1 angeordnet sein.

In einer möglichen Weiterbildung ist in das Trägerteil 1 als Element 10 ein Foliensensor derart integriert, dass durch Betasten der Deckschicht 2 im Bereich des integrierten Föliensensors dieser betätigt oder aktiviert kann.

In einer weiteren möglichen Ausführung ist in oder auf das Trägerteil 1 als Element 10 eine Elektrolumineszenz-Folie integriert, z. B. durch Hinterspritzung. In diesem Fall wird das Trägerteil 1 mit integrierter Elektrolumineszenz-Folie mit einem transparenten oder teiltransparenten Deckschichtmaterial überflutet, so dass optische Leuchteffekte, z.B. für eine ambiente Beleuchtung am Fahrzeug oder eine Ausleuchtung im Einstiegsbereich, realisierbar sind.

Anstelle einer Elektrolumineszenz-Folie können auch andere Leuchtelemente, beispielsweise zumindest ein Lichtleiter oder zumindest eine Leuchtdiode, im Trägerteil 1 integriert sein.

Eine weitere Variante sieht vor, dass die Deckschicht 2 strukturiert ausgebildet ist. Beispielsweise kann die Oberfläche der Deckschicht 2 aufgeraut oder mit einer feinen oder groben Narbung versehen sein. Hierdurch sind haptische und visuelle Eigenschaften der Deckschichtoberfläche erzielbar, die eine Griffigkeit der Oberfläche oder eine optische Reflektions-/Streufläche ermöglichen. Zur Erzielung einer Narbung mit gewünschter Eigenschaft ist die Innenseite der betreffenden Werkzeughälfte entsprechend strukturiert, insbesondere aufgeraut.

Für alle Ausführungsbeispiele der Erfindung gilt, dass die Randabschnitte A1 bis A12 derart ausgebildet sind, dass diese je nach Anwendung als Abdichtung gegen das Trägerteil 1 und/oder als Überlauf, d. h. Ablauf für das überschüssige Materials bei der Flutung zur Herstellung der Deckschicht 2, ausgebildet sind. Hierbei können durch Ausformung der Randbereiche A1 bis A12 in einfacher und variabler Weise sowohl Positionen für einen Einströmbereich des entsprechenden Materials als auch Positionen für einen Ausströmbereich des Materials aus dem Spritzgusswerkzeug festgelegt werden.

Die Erfindung ist nicht auf die hier beschriebene Ausführungsbeispiele beschränkt. Es sind auch weitere, hier nicht aufgeführte Ausgestaltungen möglich, die sich aus Kombinationen der hier offenbarten Ausführungsbeispiele ergeben.

### BEZUGSZEICHENLISTE

1 : Trägerteil
1.1 : seitlicher Schenkel des Trägerteils
1.2 : Ausnehmung
1.3 : Aussparung
1.4 : Endbereich
2 : Deckschicht
3.1, 3.2 : Rand
4 : Befestigungsmittel
5 : Durchgangsöffnungen
6 : Dichtung
7 : Stützelement
8 : Dämpfungselement
9 : Befestigungsdom
10 : Element
A1 bis A12 : Randabschnitte
L : Profilleiste
α : Winkel

## Patentansprüche

1. Zierteil für ein Kraftfahrzeug, mit einem Trägerteil (1) aus einem im Spritzgussverfahren hergestellten thermoplastischen Kunststoffteil aus schlagzähem Material und einer Deckschicht (2),
wobei die Deckschicht (2) zumindest aus Polyurea oder Polyurethan gebildet ist und eine Dicke von 100 µm bis 600 µm, insbesondere von 300 µm bis 400 µm aufweist,
wobei das Trägerteil (1) mit der Deckschicht (2) auf einer Spritzgiessmaschine in aufeinanderfolgenden oder parallel laufenden Prozessen, insbesondere in einem gemeinsamen Spritzgussprozess, hergestellt wurde,
und wobei ein von Trägerteil (1) und Deckschicht (2) gebildeter Rand (3.1, 3.2) zumindest abschnittsweise, wobei einer dieser Abschnitte vom Trägerteil (1) gebildet ist, und dieser Abschnitt des Randes (3.1, 3.2) in Randabschnitten (A1 bis A12) schräg in einem Winkel (α) von 5° bis 50° zu einer Normalen einer von dem Rand (3.1, 3.2) begrenzten und dem Trägerteil (1) abgewandten Fläche der Deckschicht (2) ausgebildet sind,
und wobei das Trägerteil (1) und die Deckschicht (2) in diesen Randabschnitten (A1 bis A12) an diesem Rand (3.1, 3.2) eine Fläche bilden, wobei der Übergang zwischen Deckschicht (2) und Trägerteil (1) stetig verläuft und höchstens eine Trennkante beinhaltet, oder zwischen Trägerteil (1) und Deckschicht (2) eine Stufe ausgebildet ist.

2. Zierteil nach Anspruch 1, **dadurch gekennzeichnet, dass** die Deckschicht (2) in diesen Randabschnitten (A1 bis A12) rand-, insbesondere kantenseitig abgerundet oder angefast ist.

3. Zierteil nach Anspruch 1 oder 2, **dadurch gekennzeichnet, dass** die Deckschicht (2) in mindestens einem Randabschnitt (A1 bis A4, A6, A10 bis A12) des Zierteils eine Randüberdeckung aufweist, die mindestens eine Seitenfläche des Trägerteils (1) teilweise oder vollständig überdeckt.

4. Zierteil nach Anspruch 3, **gekennzeichnet durch** eine umlaufende Randüberdeckung.

5. Zierteil nach einem der Ansprüche 1 bis 3, **dadurch gekennzeichnet, dass** die Deckschicht (2) an zumindest einer Seite oder an zwei gegenüberliegenden oder mehreren Seiten einen schrägen Rand (3.1, 3.2) mit in einer Fläche liegenden Deckschicht (2) und Trägerschicht (1) und an zumindest einer anderen Seite eine Randüberdeckung aufweist.

6. Zierteil nach einem der vorhergehenden Ansprüche, **dadurch gekennzeichnet, dass** in das Trägerteil (1) mindestens ein Element (10), insbesondere ein Sensor und/oder ein aktives oder passives Bauelement, integriert sind bzw. ist.

7. Zierteil nach einem der vorhergehenden Ansprüche, **dadurch gekennzeichnet, dass** am Trägerteil (1) an der der Deckschicht (2) abgewandten Seite Dichtungen (6) und/oder Elemente zur Aufnahme von Sensoren angebracht sind.

8. Zierteil nach einem der vorhergehenden Ansprüche, **dadurch gekennzeichnet, dass** am Trägerteil (1) an der der Deckschicht (2) abgewandten Seite eine Profilleiste (L) angebracht ist.

9. Zierteil nach einem der vorhergehenden Ansprüche, **dadurch gekennzeichnet, dass** das Trägerteil (1) mit einer Elektroluminieszenz-Folie versehen ist.

10. Verfahren zur Herstellung eines Zierteils für Kraftfahrzeuge mit einem Trägerteil (1) aus schlagzähem thermoplastischen Kunststoff und einer Deckschicht (2), **dadurch gekennzeichnet, dass** nach dem Spritzen des Trägerteils (1) eine Werkzeugformhälfte gedreht oder verschoben wird und eine zweite Werkzeugformhälfte gegen das Trägerteil (1), welches sich in einer jetzt gedrehten oder verschobenen Position des Werkzeugs befindet, abdichtet und anschließend eine Polyurea- oder Polyurethan-Schicht über das Trägerteil (1) zur Erzeugung der Deckschicht (2) geflutet wird, und nach dem Aushärten das Werkzeug geöffnet und das Zierteil entnommen wird.

11. Verfahren nach Anspruch 10, **dadurch gekennzeichnet, dass** zur Vermei - dung von Einfallstellen und Gewichts- und Platzreduktion das Trägerteil (1) während des Spritzgießens mittels Thermoplast-Schaumspritzguss-Verfahren hergestellt wird.

12. Verfahren nach Anspruch 11, **dadurch gekennzeichnet, dass** der Schaümspritzguss durch chemisches Treibmittel oder physikalisches Treibmittel erfolgt.

13. Verfahren nach einem der Ansprüche 10 bis 12, **dadurch gekennzeichnet, dass** die Deckschicht (2) zumindest aus Polyurea oder Polyurethan mit einer Dicke von 100 µm bis 600 µm, insbesondere von 200 µm bis 400 µm oder 300 µm bis 400 µm, gebildet wird, wobei ein von Trägerteil (1) und Deckschicht (2) gebildeter Rand (3.1, 3.2) zumindest abschnittsweise in Randabschnitten (A1 bis A12) schräg ausgebildet wird und das Trägerteil (1) und die Deckschicht (2) in diesen Randabschnitten (A1 bis A12) am Rand (3.1, 3.2) eine Fläche bilden, wobei die Deckschicht (2) in diesen Randabschnitten (A1 bis A12) insbesondere randseitig oder insbesondere kantenseitig abgerundet oder angefast wird.

14. Verfahren nach einem der Ansprüche 10 bis 13, **dadurch gekennzeichnet,**
- **dass** in mindestens einem Randabschnitt (A1 bis A4, A6, A10 bis A12) des Zierteils eine Randüberdeckung der Deckschicht (2) erzeugt wird, die mindestens eine Seitenfläche des Trägerteils (1) teilweise oder vollständig überdeckt,
- wobei die Randüberdeckung insbesondere umlaufend ausgebildet ist oder an zumindest einer Seite oder an zwei gegenüberliegenden oder mehreren Seiten der Deckschicht (2) ein schräger Rand (3.1, 3.2) mit in einer Fläche liegenden Deckschicht (2) und Trägerschicht (1) und an zumindest einer anderen Seite eine Randüberdeckung gebildet werden.

15. Verfahren nach einem der Ansprüche 10 bis 14, **dadurch gekennzeichnet, dass** in das Trägerteil (1) mindestens ein Element (10), insbesondere ein Sensor und/oder ein aktives oder passives Bauelement, integriert werden bzw. wird.

## Claims

1. Trim part for a motor vehicle, with a carrier part (1) comprising a thermoplastic part of impact-resistant material produced by an injection-moulding process and a covering layer (2),
wherein the covering layer (2) is formed at least from polyurea or polyurethane and has a thickness of 100 µm to 600 µm, in particular of 300 µm to 400 µm,
wherein the carrier part (1) was produced with the covering layer (2) on an injection-moulding machine in processes following one after the other or taking place at the same time, in particular in a joint injection-moulding process,
and wherein a border (3.1, 3.2) formed by the carrier part (1) and the covering layer (2), at least in certain portions, wherein one of these portions is formed by the carrier part (1), and this portion of the border (3.1, 3.2) are formed in border portions (A1 to A12) obliquely at an angle (α) of 5° to 50° in relation to a normal to a surface area of the covering layer (2) that is bounded by the border (3.1, 3.2) and is facing away from the carrier part (1),
and wherein the carrier part (1) and the covering layer (2) in these border portions (A1 to A12) form a surface area on this border (3.1, 3.2), wherein the transition is continuous and at most includes one separating edge, or a step is formed between the carrier part (1) and the covering layer (2).

2. Trim part according to Claim 1, **characterized in that** the covering layer (2) in these border portions (A1 to A12) is rounded or bevelled at the border, in particular at the edge.

3. Trim part according to Claim 1 or 2, **characterized in that** the covering layer (2) has in at least one border portion (A1 to A4, A6, A10 to A12) of the trim part a border covering, which partially or completely covers over at least one side area of the carrier part (1).

4. Trim part according to Claim 3, **characterized by** a peripheral border covering.

5. Trim part according to one of Claims 1 to 3, **characterized in that** the covering layer (2) has, on at least one side or on two opposite sides or a number of sides, a sloping border (3.1, 3.2) with a covering layer (2) lying in a surface area and a carrier layer (1) and, on at least one other side, a border covering.

6. Trim part according to one of the preceding claims, **characterized in that** at least one element (10), in particular a sensor and/or an active or passive component, is or are integrated in the carrier part (1).

7. Trim part according to one of the preceding claims, **characterized in that** seals (6) and/or elements for receiving sensors are attached to the carrier part (1) on the side facing away from the covering layer (2) .

8. Trim part according to one of the preceding claims, **characterized in that** a profile strip (L) is attached to the carrier part (1) on the side facing away from the covering layer (2).

9. Trim part according to one of the preceding claims, **characterized in that** the carrier part (1) is provided with an electroluminescent foil.

10. Method for producing a trim part for motor vehicles with a carrier part (1) of impact-resistant thermoplastic and a covering layer (2), **characterized in that**, after the injection moulding of the carrier part (1), one mould half is turned or displaced and a second mould half is sealed with respect to the carrier part (1), which is located in a now turned or displaced position of the mould, and subsequently the carrier part (1) is flow-coated with a layer of polyurea or polyurethane to produce the covering layer (2), and after curing the mould is opened and the trim part is removed.

11. Method according to Claim 10, **characterized in that**, to avoid sink marks and to reduce weight and space, the carrier part (1) is produced by means of a thermoplastic foam injection-moulding process during the injection moulding.

12. Method according to Claim 11, **characterized in that** the foam injection moulding is performed by a chemical foaming agent or physical foaming agent.

13. Method according to one of Claims 10 to 12, **characterized in that** the covering layer (2) is formed at least from polyurea or polyurethane with a thickness of 100 µm to 600 µm, in particular of 200 µm to 400 µm or 300 µm to 400 µm, wherein a border (3.1, 3.2), formed by the carrier part (1) and the covering layer (2), at least in certain portions, is formed as sloping in border portions (A1 to A12), and the carrier part (1) and the covering layer (2) in these border portions (A1 to A12) form a surface area on the border (3.1, 3.2), wherein the covering layer (2) in these border portions (A1 to A12) is rounded or bevelled, in particular at the border or in particular at the edge.

14. Method according to one of Claims 10 to 13, **characterized**
- **in that** in at least one border portion (A1 to A4, A6, A10 to A12) of the trim part there is produced a border covering of the covering layer (2) which partially or completely covers over at least one side area of the carrier part (1),
- wherein the border covering is formed in particular peripherally or, on at least one side or on two opposite sides or a number of sides of the covering layer (2), a sloping border (3.1, 3.2) with a covering layer (2) and a carrier layer (1) lying in a surface area is formed and, on at least one other side, a border covering is formed.

15. Method according to one of Claims 10 to 14, **characterized in that** at least one element (10), in particular a sensor and/or an active or passive component, is or are integrated in the carrier part (1).

## Revendications

1. Pièce décorative pour un véhicule automobile, comprenant une partie de support (1) constituée d'une pièce en plastique thermoplastique fabriquée par un procédé de moulage par injection, constituée d'un matériau à résistance élevée aux chocs et d'une couche de recouvrement (2),
la couche de recouvrement (2) étant formée au moins de polyurée ou de polyuréthane et présentant une épaisseur de 100 µm à 600 µm, en particulier de 300 µm à 400 µm,
la partie de support (1) ayant été fabriquée avec la couche de recouvrement (2) sur une machine de moulage par injection dans des processus successifs ou se déroulant en parallèle, en particulier dans un processus de moulage par injection commun,
et un bord (3.1, 3.2) étant formé par la partie de support (1) et la couche de recouvrement (2), au moins en partie, l'une de ces parties étant formée par la partie de support (1), et cette partie du bord (3.1, 3.2) sont réalisées dans des parties de bord (A1 à A12) obliquement suivant un angle (α) de 5° à 50° par rapport à une perpendiculaire à une surface de la couche de recouvrement (2) limitée par le bord (3.1, 3.2) et opposée à la partie de support (1),
et la partie de support (1) et la couche de recouvrement (2) formant, dans ces parties de bord (A1 à A12) au niveau de ce bord (3.1, 3.2) une surface, la transition s'étendant en continu et contenant tout au plus une arête de séparation, ou un gradin étant réalisé entre la partie de support (1) et la couche de recouvrement (2).

2. Pièce décorative selon la revendication 1, **caractérisée en ce que** la couche de recouvrement (2) est arrondie ou biseautée au niveau du bord, en particulier au niveau d'une arête, dans ces parties de bord (A1 à A12).

3. Pièce décorative selon la revendication 1 ou 2, **caractérisée en ce que** la couche de recouvrement (2) présente, dans au moins une partie de bord (A1 à A4, A6, A10 à A12) de la pièce décorative, un recouvrement de bord, qui recouvre partiellement ou complètement au moins une surface latérale de la partie de support (1).

4. Pièce décorative selon la revendication 3, **caractérisée par** un recouvrement de bord périphérique.

5. Pièce décorative selon l'une quelconque des revendications 1 à 3, **caractérisée en ce que** la couche de recouvrement (2) présente, au niveau d'au moins un côté ou au niveau de deux côtés opposés ou de plusieurs côtés, un bord oblique (3.1, 3.2) avec une couche de recouvrement (2) située dans une surface et une couche de support (1) et , au niveau d'au moins un autre côté, un recouvrement de bord.

6. Pièce décorative selon l'une quelconque des revendications précédentes, **caractérisée en ce que** dans la partie de support (1) est intégré au moins un élément (10), en particulier un capteur et/ou un composant actif ou passif.

7. Pièce décorative selon l'une quelconque des revendications précédentes, **caractérisée en ce que** des joints d'étanchéité (6) et/ou des éléments pour recevoir des capteurs sont montés sur le côté opposé à la couche de recouvrement (2) au niveau de la partie de support (1).

8. Pièce décorative selon l'une quelconque des revendications précédentes, **caractérisée en ce qu'**une baguette profilée (L) est montée sur la partie de support (1) du côté opposé à la couche de recouvrement (2).

9. Pièce décorative selon l'une quelconque des revendications précédentes, **caractérisée en ce que** la partie de support (1) est pourvue d'un film électroluminescent.

10. Procédé de fabrication d'une pièce décorative pour véhicules automobiles comprenant une partie de support (1) constituée d'une matière plastique thermoplastique à résistance élevée aux chocs et d'une couche de recouvrement (2), **caractérisé en ce qu'**après le moulage par injection de la partie de support (1), une moitié du moule d'outil est tournée ou déplacée et une deuxième moitié du moule d'outil est étanchéifiée par rapport à la partie de support (1) qui se trouve dans une position de l'outil maintenant tournée ou déplacée, puis une couche de polyurée ou de polyuréthane est versée par-dessus la partie de support (1) pour produire la couche de recouvrement (2) et après le durcissement, l'outil est ouvert et la pièce décorative est enlevée.

11. Procédé selon la revendication 10, **caractérisé en ce que** pour éviter des retassures et pour réduire le poids et la place, la partie de support (1), pendant le moulage par injection, est fabriquée au moyen d'un procédé de moulage par injection de mousse thermoplastique.

12. Procédé selon la revendication 11, **caractérisé en ce que** le moulage par injection de mousse s'effectue par un propulseur chimique ou un propulseur physique.

13. Procédé selon l'une quelconque des revendications 10 à 12, **caractérisé en ce que** la couche de recouvrement (2) est formée au moins de polyurée ou de polyuréthane présentant une épaisseur de 100 µm à 600 µm, en particulier de 200 µm à 400 µm ou de 300 µm à 400 µm, un bord (3.1, 3.2) formé par la partie de support (1) et la couche de recouvrement (2) étant réalisé obliquement au moins en partie dans des parties de bord (A1 à A12) et la partie de support (1) et la couche de recouvrement (2) formant dans ces parties de bord (A1 à A12) au niveau du bord (3.1, 3.2) une surface, la couche de recouvrement (2) étant arrondie ou biseautée notamment au niveau du bord ou en particulier au niveau d'une arête, dans ces parties de bord (A1 à A12).

14. Procédé selon l'une quelconque des revendications 10 à 13, **caractérisé en ce que**
- dans au moins une partie de bord (A1 à A4, A6, A10 à A12) de la pièce décorative, un recouvrement de bord de la couche de recouvrement (2) est produit, lequel recouvre partiellement ou complètement au moins une surface latérale de la partie de support (1),
- le recouvrement de bord étant réalisé notamment sur tout le pourtour, ou au niveau d'au moins un côté ou au niveau de deux côtés opposés ou de plusieurs côtés de la couche de recouvrement (2) étant formé un bord oblique (3.1, 3.2) avec une couche de recouvrement (2) située dans une surface et une couche de support (1), et au niveau d'au moins un autre côté, étant formé un recouvrement de bord.

15. Procédé selon l'une quelconque des revendications 10 à 14, **caractérisé en ce que** dans la partie de support (1) est intégré au moins un élément (10), en particulier un capteur et/ou un composant actif ou passif.
